# EUROPEAN PATENT SPECIFICATION

(11) **EP 1 692 029 B1**
(45) Date of publication and mention of the grant of the patent: **08.08.2007**
(21) Application number: 04800416.2
(22) Date of filing: 29.11.2004
(51) Int. Cl.: B62D 1/08, B62D 1/04

(54) **VEHICLE STEERING WHEEL**
FAHRZEUGLENKRAD
ROUE DIRECTRICE DE VEHICULE

(30) Priority: 09.12.2003 SE 0303299
(43) Date of publication of application: 23.08.2006
(73) Proprietor: Scania CV AB (publ), 151 87 Södertälje (SE)
(72) Inventor: JOHANSSON, Mats, S-702 12 Örebro (SE); PIHLGREN, Ola, S-116 39 Stockholm (SE); WESTERMARK, Sara, S-116 31 Stockholm (SE); KARLSSON, Teddy, S-150 16 Hölö (SE)
(74) Representative: Egrelius, Fredrik
(86) International application number: PCT/SE2004/001765
(87) International publication number: WO 2005/056365

(56) References cited:
- US-A- 4 638 131
- US-A- 5 002 306
- US-A- 5 090 731
- PATENT ABSTRACTS OF JAPAN vol. 017, no. 507 (M-1479) 13 September 1993 & JP 05 131 933 A (MAZDA MOTOR CORP) 28 May 1993
- PATENT ABSTRACTS OF JAPAN vol. 1995, no. 02 31 March 1995 & JP 06 329 025 A (NISSAN MOTOR CO LTD) 29 November 1994

## Description

### TECHNICAL FIELD

The invention relates generally to vehicles and more specifically to steering wheels for vehicles, particularly trucks.

### BACKGROUND OF THE INVENTION

US 2002/0125698 A1 discloses a steering wheel with two upper and two lower spokes. Multifunctional switch modules with control buttons for remote actuation of specific vehicle functions are located between the upper and the lower spokes along an air bag module.

For a driver that often drives long hours it is very important to have a good and ergonomic driving position in order to avoid discomfort and tension in the muscles. A driver using the steering wheel in US 2002/0125698 A1 cannot for instance fit his/her hands around the lower spokes, which give an ergonomic position for the hands when driving long distances. It is not easy to access the control buttons without moving the hands from a resting position.

Since truck drivers tend to rest their arms on the steering wheel while driving, a control button may unintentionally be pressed on a steering wheel of the type disclosed in US 2002/0125698 A1.

Moreover, since steering wheels for trucks are large and the drivers want to have a clear view of the instrument panel through the steering wheel, the distance to the control buttons at a steering wheel in accordance with US 2002/0125698 A1 in a truck would be too great.

Thus, the steering wheel according to US 2002/0125698 A1 is not particularly user-friendly and ergonomic.

A vehicle steering wheel according the preamble of claim 1 is known from the document US 5,090,731.

### SUMMARY OF THE INVENTION

The object of the invention is to provide a more user-friendly and ergonomic steering wheel, particularly for trucks, giving the driver a good driving position.

Another object is to provide a steering wheel at which the risk for the driver to unintentionally touch a control button on the steering wheel is minimized.

A vehicle steering wheel according the invention is described by claim 1.

By making the lower spokes graspable at least for a normal man's hand, i.e. forming them as handles, a good driving position for the driver will be enabled. Since particularly truck drivers sit many hours in the truck every day, grasping the lower spokes now and then will be a good alternative to holding on to the rim of the steering wheel or grasping the upper spokes.

Preferably, the lower spokes extend from positions around the rim at 40° below the horizontal symmetry axis of the steering wheel on either side of the vertical symmetry axis of the steering wheel.

Preferably, the lower spokes form an angle of between 67° and 77°, particularly 72°, with the vertical symmetry axis of the steering wheel.

It has been found that an inclination of the lower spokes of 72° relative to the vertical symmetry axis of the steering wheel is more or less optimal for the driver.

Preferably, a multifunctional switch module with thumb-operated control buttons for remote actuation of specific vehicle functions is located symmetrically between the two lower spokes on the steering wheel beneath the signal cap.

By placing the multifunctional switch module symmetrically between the two lower spokes beneath the signal cap, it will be easy for the driver to operate the buttons with his thumbs while grasping the lower spokes without moving his eyes from the road. When doing this the driver can hold his/her hands in a restful position without having to bend the wrists in unpleasant angles.

Preferably, the lower spokes are separated from the upper spokes by spaces for receiving a driver's elbows.

Hereby, it will be possible for a truck driver to rest his arms at temporary stops without running the risk of unintentionally pressing a control button on the multifunctional switch module.

### BRIEF DESCRIPTION OF THE DRAWING

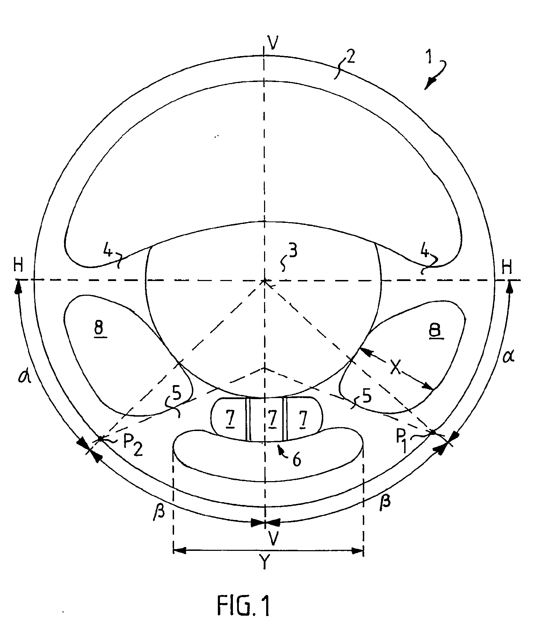

The invention will be described more in detail below with reference to the appended drawing on which Fig. 1 is a plan view of an embodiment of a vehicle steering wheel according to the invention.

### DESCRIPTION OF THE INVENTION

Fig. 1 is a plan view of an embodiment of a vehicle steering wheel 1 according to the invention.

As most of today's steering wheels, the steering wheel 1 comprises a rim 2, a signal cap 3, and two upper spokes 4 and two lower spokes 5 between the rim 2 and the signal cap 3. In a manner known per se, the upper spokes 4 extend along the horizontal symmetry axis H-H of the steering wheel 1 towards its centre.

In accordance with the invention, the two lower spokes 5 are graspable, i.e. formed as handles to be grasped by a driver's hands. The graspable part of the upper edge of the lower spokes 5 has room for a normal man's hand. The width X of the graspable part of upper edge of the lower spokes is preferably 85 mm ± 20 mm.

To provide a good and relaxed driving position for the driver, particularly a truck driver, in accordance with the invention, the lower spokes 5 extend from positions around the rim 2 that are located α° below the horizontal symmetry axis H-H of the steering wheel 1 on either side of the vertical symmetry axis V-V of the steering wheel 1, and, moreover, the lower spokes 5 are oriented such that they form an angle of β° with the vertical symmetry axis V-V of the steering wheel 1. Points P₁, P₂ on the outer surface of the rim 2 on either side of the vertical symmetry axis V-V, that is in line with the upper edge of respective lower spoke are located α° below the horizontal symmetry axis H-H of the steering wheel 1 on either side of the vertical symmetry axis V-V of the steering wheel 1. Moreover points P₁, P₂ are located such that a line from respective point in line with the upper edge of respective lower spoke form β° with the vertical symmetry axis V-V of the steering wheel 1.

The angle α is between 30° and 60°, preferably 40°, and the angle β is between 62° and 82°, preferably between 67° and 77°, and specifically 72°.

By giving the lower spokes 5 such an inclination at such positions, it will be natural for the driver to grasp the lower spokes 5 while driving. It will also give an ergonomic driving position which minimizes the need to bend the wrists in uncomfortable and tiring positions.

Also in accordance with the invention, a multifunctional switch module 6 with thumb-operated control buttons 7 for remote actuation of frequently used specific vehicle functions such as cruise control, downhill speed control and control of an information display, is located symmetrically between the two lower spokes 5 beneath the signal cap 3.

It is to be understood that other thumb-operated control buttons (not shown) can be symmetrically located in the upper spokes 4 of the steering wheel for actuation by the driver of other frequently used functions in a truck such as different radio functions with his hands grasping the upper spokes 4.

In Fig. 1, three control buttons 7 are shown on the multifunctional switch module 6. It is however to be understood that the number of control buttons 7 is in no way restricted to three.

By locating the multifunctional switch module 6 between the two lower spokes 5, the truck driver will be able to operate the control buttons 7 with his thumbs while grasping the lower spokes 5 with his hands without moving his eyes from the road.

To enable the driver to operate the control buttons 7 with both his thumbs, the control buttons 7 of the multifunctional switch module 6 are located symmetrically relative to the vertical symmetry axis of the steering wheel 1 as illustrated in Fig. 1.

To enable the driver to rest his arms on the steering wheel 2, particularly at temporary stops, e.g. at traffic lights, the lower spokes 5 are separated from the upper spoke 4 by spaces 8 that are large enough for receiving the driver's elbows. Moreover, the spaces 8 are large enough to give the driver a clear view to instruments behind the steering wheel 1 while driving.

As should be apparent from the above, the steering wheel according to the invention is user-friendly, offers great comfort to the driver, and is "safe" in that the driver can operate control buttons on the steering wheel without moving his eyes from the road.

The lower part of the rim is also graspable and the driver may grasp it by both of his/her hands. The width Y of this graspable part is 200 ± 20 mm and the distance between the switch module and the rim is approximately 45 mm.

An outer diameter of the steering wheel of about 450 mm will give a steering wheel with good manoeuvrability of the vehicle.

## Claims

1. A vehicle steering wheel (1) comprising a rim (2), a signal cap (3) and two upper and two lower spokes (4, 5) extending between the rim (2) and the signal cap (3), the upper spokes (4) extending along the horizontal symmetry axis (H-H) of the steering wheel (1) towards its centre, the two lower spokes (5) being graspable by a normal man's hand, the lower spokes (5) extending from positions around the rim (2) so that points P₁, P₂ that are in line with an upper edge of the respective lower spokes (5) on the outer surface of the rim are located between 30° and 60° below the horizontal symmetry axis (H-H) on either side of the vertical symmetry axis (V-V) of the steering wheel (1), **characterized in that** the upper edge of the lower spokes (5), which is in line with the respective points P₁, P₂ form an angle (β) of between 62° and 82° with the vertical symmetry axis (V-V) of the steering wheel (1) and **in that** a multifunctional switch module (6) with thumb-operated control buttons (7) for remote actuation of specific vehicle functions is located symmetrically between the two lower spokes (5) beneath the signal cap (3), wherein the driver can operate the module while grasping the lower spokes.

2. The steering wheel according to claim 1, **characterized in that** the two points P₁, P₂ are situated 40° below the horizontal symmetry axis (H-H) on either side of the vertical symmetry axis (V-V) of the steering wheel (1).

3. The steering wheel according to claim 1 or 2, **characterized in that** the angle (β) from the vertical symmetry axis (V-V) of the steering wheel to the respective points P₁, P₂ (1) are between 67° and 77°.

4. The steering wheel according to claim 3, **characterized in that** the angle (β) is 72°.

5. The steering wheel according to any of claims 1 - 4, **characterized in that** the lower spokes (5) are separated from the upper spokes (4) by spaces (8) for receiving a driver's elbows.

6. The steering wheel according to any of claims 1 - 5, **characterized in that** the width X of the graspable part of upper edge of the lower spokes is between 65 mm and 105 mm.

7. The steering wheel according to claim 6, **characterized in that** the width X of the graspable part of upper edge of the lower spokes is approximately 85 mm.

## Patentansprüche

1. Fahrzeuglenkrad (1) mit einem Radkranz (2), einer Signalkappe (3) und zwei oberen und zwei unteren Speichen (4, 5), die sich zwischen dem Radkranz (2) und der Signalkappe (3) erstrecken, wobei sich die oberen Speichen (4) entlang der horizontalen Symmetrieachse (H-H) des Fahrzeuglenkrads (1) auf seine Mitte zu erstrecken, wobei die zwei unteren Speichen (5) von der Hand eines normalen Manns gegriffen werden können, wobei die unteren Speichen (5) sich von Stellen an dem Radkranz (2) derart erstrecken, dass Punkte P₁, P₂, die mit einer oberen Kante der jeweiligen unteren Speiche (5) auf der äußeren Oberfläche des Radkranzes auf einer Linie liegen, zwischen 30° und 60° unter der horizontalen Symmetrieachse (H-H), auf beiden Seiten der vertikalen Symmetrieachse (V-V) des Lenkrads (1), angeordnet sind,
**dadurch gekennzeichnet, dass** die obere Kante der unteren Speichen (5), die mit den entsprechenden Punkten P₁, P₂ auf einer Linie liegen, einen Winkel (β) zwischen 62° und 82° mit der vertikalen Symmetrieachse (V-V) des Lenkrads (1) bildet, und dass ein multifunktionales Schaltmodul (6) mit per Daumen betätigbaren Steuerknöpfen (7) zum Fern-Betätigen spezifischer Fahrzeugfunktionen symmetrisch zwischen den zwei unteren Speichen (5) unter der Signalkappe (3) angeordnet ist, wobei der Fahrer das Modul betätigen kann, während er die unteren Speichen greift.

2. Lenkrad nach Anspruch 1,
**dadurch gekennzeichnet, dass** die zwei Punkte P₁, P₂ im Winkel von 40° unter der horizontalen Symmetrieachse (H-H) auf beiden Seiten der vertikalen Symmetrieachse (V-V) des Lenkrads (1) liegen.

3. Lenkrad nach Anspruch 1 oder 2,
**dadurch gekennzeichnet, dass** der Winkel (β) zwischen der vertikalen Symmetrieachse (V-V) des Lenkrads und den jeweiligen Punkten P₁, P₂ (1) zwischen 67° und 77° beträgt.

4. Lenkrad nach Anspruch 3,
**dadurch gekennzeichnet, dass** der Winkel (β) 72° beträgt.

5. Lenkrad nach einem der Ansprüche 1 bis 4,
**dadurch gekennzeichnet, dass** die unteren Speichen (5) durch Zwischenräume (8) zur Aufnahme der Ellenbogen eines Fahrers von den oberen Speichen (4) getrennt sind.

6. Lenkrad nach einem der Ansprüche 1 bis 5,
**dadurch gekennzeichnet, dass** die Breite X des greifbaren Teils der oberen Kante der unteren Speichen zwischen 65 mm und 105 mm beträgt.

7. Lenkrad nach Anspruch 6,
**dadurch gekennzeichnet, dass** die Breite X des greifbaren Teils der oberen Kante der unteren Speichen ungefähr 85 mm beträgt.

## Revendications

1. Un volant de direction de véhicule (1) comprenant une couronne (2), un chapeau d'avertisseur sonore (3) et deux branches supérieures et inférieures (4, 5) s'étendant entre la couronne (2) et le chapeau d'avertisseur sonore (3), les branches supérieures (4) s'étendant le long de l'axe de symétrie horizontal (H-H) du volant de direction (1) en direction de son centre, les deux branches inférieures (5) étant saisissables par une main humaine normale, les branches inférieures (5) s'étendant depuis des positions autour de la couronne (2) de sorte que des points P₁, P₂ alignés avec un bord supérieur des branches inférieures (5) respectives sur la surface extérieure de la couronne se trouvent situés entre 30° et 60° au-dessous de l'axe de symétrie horizontal (H-H) de part et d'autre de l'axe de symétrie vertical (V-V) du volant de direction (1),
**caractérisé en ce que** le bord supérieur des branches inférieures (5), qui est aligné avec les points P₁, P₂ respectifs, forme un angle (β) compris entre 62° et 82° avec l'axe de symétrie vertical (V-V) du volant de direction (1), et **en ce qu'**un module de commutation multifonctionnel (6) à boutons de commande (7) actionnés au pouce pour la commande à distance de fonctions spécifiques du véhicule est placé symétriquement entre les deux branches inférieures (5) au-dessous du chapeau d'avertisseur sonore (3), en permettant ainsi au conducteur d'actionner le module tout en tenant les branches inférieures.

2. Le volant de direction de la revendication 1, **caractérisé en ce que** les deux points P₁, P₂ sont situés à 40° au-dessous de l'axe de symétrie horizontal (H-H) de part et d'autre de l'axe de symétrie vertical (V-V) du volant de direction (1).

3. Le volant de direction de la revendication 1 ou 2, **caractérisé en ce que** l'angle (β) de l'axe de symétrie vertical (V-V) du volant de direction aux points P₁, P₂ (1) respectifs est compris entre 67° et 77°.

4. Le volant de direction de la revendication 3, **caractérisé en ce que** l'angle (β) est de 72°.

5. Le volant de direction selon l'une quelconque des revendications 1 à 4, **caractérisé en ce que** les branches inférieures (5) sont séparées des branches supérieures (4) par des espaces (8) pour la réception des coudes d'un conducteur.

6. Le volant de direction de l'une quelconque des revendications 1 à 5, **caractérisé en ce que** la largeur X de la partie saisissable du bord supérieur des branches inférieures est comprise entre 65 mm et 105 mm.

7. Le volant de direction de la revendication 6, **caractérisé en ce que** la largeur X de la partie saisissable du bord supérieur des branches inférieures est d'environ 85 mm.
